(19) Europäisches Patentamt
European Patent Office
Office européen des brevets

(11) **EP 2 894 188 A1**

(12) **EUROPEAN PATENT APPLICATION**
published in accordance with Art. 153(4) EPC

(43) Date of publication:
**15.07.2015 Bulletin 2015/29**

(21) Application number: **13835951.8**

(22) Date of filing: **03.09.2013**

(51) Int Cl.:
*C08J 3/09* (2006.01)  *B01F 1/00* (2006.01)
*B01F 3/12* (2006.01)  *B01F 7/16* (2006.01)
*B01F 15/06* (2006.01)  *D01D 1/02* (2006.01)
*D01F 6/18* (2006.01)  *D01F 9/22* (2006.01)

(86) International application number:
**PCT/JP2013/073660**

(87) International publication number:
**WO 2014/038539 (13.03.2014 Gazette 2014/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.09.2012 JP 2012196407**

(71) Applicant: **Mitsubishi Rayon Co., Ltd.**
**Tokyo 100-8253 (JP)**

(72) Inventors:
• **MAENO, Kazuhiro**
**Otake-shi**
**Hiroshima 739-0693 (JP)**
• **TOMOBE, Hitoshi**
**Otake-shi**
**Hiroshima 739-0693 (JP)**

(74) Representative: **TBK**
**Bavariaring 4-6**
**80336 München (DE)**

(54) **PROCESS FOR PRODUCING ACRYLONITRILE-BASED POLYMER SOLUTION, SHEARING DEVICE, PROCESS FOR PRODUCING ACRYLONITRILE-BASED FIBER, AND PROCESS FOR PRODUCING CARBON FIBER**

(57) A process for producing an acrylonitrile-based polymer solution is provided with which it is possible to evenly and efficiently dissolve an acrylonitrile-based polymer in a solvent, inhibit the filter or spinning nozzle from clogging, and stably produce an acrylonitrile-based polymer solution. The process for producing an acrylonitrile-based polymer solution comprises supplying a mixture of the polymer and a solvent to the dispersion chamber of a shearing device comprising a cylinder and a rotor that rotates inside the cylinder, rotating the rotor under the following conditions to apply shear force to the mixture, and thereafter heating the obtained mixture to obtain an acrylonitrile-based polymer solution. $W=(W_1-W_2)/M \geq 0.12$ (kWh/kg). $W_1$, $W_2$, and $M$ are defined in the description. Alternatively, the conditions may be changed so that $W \geq 1.60$, and the heating may be omitted.

[Fig. 2]

**Description**

TECHNICAL FIELD

The present invention relates to a process for producing an acrylonitrile-based polymer solution, and it relates to a process for producing an acrylonitrile-based polymer solution having no gel production as the acrylonitrile-based polymer is homogeneously dissolved in a solvent. The invention also relates to a shearing device suitable for performing the aforementioned process, a process for producing an acrylonitrile-based fiber using the aforementioned process, and a process for producing a carbon fiber having the acrylonitrile-based fiber as a precursor.

BACKGROUND ART

As a process for producing an acrylonitrile-based polymer solution of a related art, a method of heating a mixture of an acrylonitrile-based polymer and a solvent by using a double-tube type heat exchanger or a multi-tube type heat exchanger and dissolving the acrylonitrile-based polymer in the solvent is known.
When the acrylonitrile-based polymer is mixed and dispersed as a powder in a solvent, only the perimeter of a lump of acrylonitrile-based polymer powder is dissolved by the solvent and the solvent does not permeate into the inside of the lump, and thus a poor dispersion product may be easily yielded. Such a poor dispersion product remains undissolved until the end even after it passes through a heat exchanger of a dissolving step, and thus there is a case in which an undissolved acrylonitrile-based polymer is present as residuals. Due to such undissolved product, a filter for filtering the acrylonitrile-based polymer may be easily clogged.
In Patent Document 1, there is described a dissolving process for dissolving an acrylonitrile-based polymer by using a device equipped with a cylinder and a rotor installed in the inside of the cylinder, in which pin members are installed projectingly on each of them, and the dissolving is achieved based on heat generation caused by the shear force occurring between the pin members.

CITATION LIST

PATENT DOCUMENT

Patent Document 1: JP 2002-45671 A

DISCLOSURE OF THE INVENTION

PROBLEM TO BE SOLVED BY THE INVENTION

The dissolving process of Patent Document 1 is, from the viewpoint of homogeneously dissolving an acrylonitrile-based polymer in a solvent, an improved process. However, it is still required to further improve the solubility of the acrylonitrile-based polymer. In fact, when estimation is made based on the description of Examples of Patent Document 1, the index W, which will be later described in detail, is believed to be about 0.2 kWh/kg. Thus, the level of pressure increase (an indicator of solubility) is improved according to a filtering pressure increase test compared to the case of using a double-tube type heat exchanger. However, a further improvement of solubility is required.
An object of the invention is to provide a process for producing stably an acrylonitrile-based polymer solution with which an acrylonitrile-based polymer solution can be homogeneously and efficiently dissolved in a solvent so that the clogging of a filter or a spinning nozzle is inhibited, and also a shearing device which can be suitably used for performing the process.
Another object is to provide a process for producing an acrylonitrile-based fiber using the acrylonitrile-based polymer solution obtained therefrom and a process for producing a carbon fiber having the acrylonitrile-based fiber as a precursor.

MEANS FOR SOLVING PROBLEM

According to each embodiment of the invention, a process for producing an acrylonitrile-based polymer solution, a shearing device, a process for producing an acrylonitrile-based fiber, and a process for producing a carbon fiber as described below are provided.

　　1) A process for producing an acrylonitrile-based polymer solution including supplying a mixture of an acrylonitrile-based polymer and a solvent to a dispersion chamber of a shearing device having a cylinder and a rotor that rotates inside the cylinder, rotating the rotor under the following conditions to apply shear force to the mixture, and thereafter heating the obtained mixture to obtain an acrylonitrile-based polymer solution:

$$W = (W_1 - W_2)/M \geq 0.12 \ (kWh/kg),$$

in which $W_1$ is an electric power (kW) required for rotating the rotor at the time of applying shear force to the mixture; $W_2$ is an electric power (kW) required for obtaining the same rotation number as the rotation number of the rotor at the time of obtaining $W_1$ when, instead of the mixture, water is used in the same mass flow amount as the mixture; and M is a mass flow amount (kg/h) of the acrylonitrile-based polymer supplied to the dispersion chamber at the time of obtaining $W_1$.

2) The process for producing an acrylonitrile-based polymer solution described in 1), in which the W is 4.00 kWh/kg or less.

3) The process for producing an acrylonitrile-based polymer solution described in 1), in which the W is less than 1.60 kWh/kg.

4) The process for producing an acrylonitrile-based polymer solution described in any one of 1) to 3), in which the mixture is heated at 100 to 130°C during the heating.

5) The process for producing an acrylonitrile-based polymer solution described in any one of 1) to 4), in which, for the heating, the heating is performed by using at least one means selected from a heat exchanger and a temperature control tank and a pin type mixer is used as a shearing device.

6) A process for producing an acrylonitrile-based polymer solution including supplying a mixture of an acrylonitrile-based polymer and a solvent to a dispersion chamber of a shearing device having a cylinder and a rotor that rotates inside the cylinder and rotating the rotor under the following conditions to apply shear force to the mixture for obtaining an acrylonitrile-based polymer solution:

$$W = (W_1 - W_2)/M \geq 1.60 \ (kWh/kg),$$

in which $W_1$ is an electric power (kW) required for rotating the rotor at the time of applying shear force to the mixture; $W_2$ is an electric power (kW) required for obtaining the same rotation number as the rotation number of the rotor at the time of obtaining $W_1$ when, instead of the mixture, water is used in the same mass flow amount as the mixture; and M is a mass flow amount (kg/h) of the acrylonitrile-based polymer supplied to the dispersion chamber at the time of obtaining $W_1$.

7) The process for producing an acrylonitrile-based polymer solution described in 6), in which the W is 5.00 kWh/kg or less.

8) The process for producing an acrylonitrile-based polymer solution described in any one of 1) to 7), in which the dwell time of the mixture in the dispersion chamber of the shearing device is 3 seconds to 1500 seconds.

9) The process for producing an acrylonitrile-based polymer solution described in any one of 1) to 8), in which the temperature of the mixture at an exit of the dispersion chamber is 40°C to 115°C.

10) The process for producing an acrylonitrile-based polymer solution described in any one of 1) 9), in which the shearing device is a pin type mixer having pin members projectingly installed on positions of an inner wall of the cylinder and an outer wall of the rotor, each of the positions not being in contact with each other, and a distance between the tip of the pin member projectingly installed on the outer wall of the rotor and the inner wall of the cylinder is 2 mm or more but less than 5 mm.

11) The process for producing an acrylonitrile-based polymer solution described in any one of 1) to 10), in which the shearing device is a pin type mixer having pin members projectingly installed on positions of an inner wall of the cylinder and an outer wall of the rotor, each of the positions not being in contact with each other, and a distance between the tip of the pin member projectingly installed on the inner wall of the cylinder and the outer wall of the rotor is 2 mm or more but less than 5 mm.

12) The process for producing an acrylonitrile-based polymer solution described in any one of 1) to 11), in which the axial direction distance between neighboring pin members is 2 mm to 10 mm when the pin member projectingly installed on the inner wall of the cylinder and the pin member projectingly installed on the outer wall of the rotor come nearest to each other.

13) A shearing device for an acrylonitrile-based polymer solution, the shearing device having a cylinder and a rotor that rotates inside the cylinder in which pin members are projectingly installed on positions of an inner wall of the cylinder and an outer wall of the rotor, each of the positions not being in contact with each other, and a distance between the tip of the pin member projectingly installed on the outer wall of the rotor and the inner wall of the cylinder is 2 mm or more but less than 5 mm.

14) The shearing device for an acrylonitrile-based polymer solution described in 13), in which the distance between the tip of the pin member projectingly installed on the inner wall of the cylinder and the outer wall of the rotor is 2 mm or more but less than 5 mm.

15) The shearing device for an acrylonitrile-based polymer solution described in 13) or 14), in which the axial direction distance between neighboring pin members of the pin member projectingly installed on the inner wall of the cylinder and the pin member projectingly installed on the outer wall of the rotor is 2 mm to 10 mm.

16) A process for producing an acrylonitrile-based fiber by spinning an acrylonitrile-based polymer solution produced by the production process described in any one of 1) to 12) to obtain an acrylonitrile-based fiber.

17) A process for producing a carbon fiber by calcining an acrylonitrile-based fiber produced by the production process described in 16) to obtain a carbon fiber.

EFFECT OF THE INVENTION

According to the invention, a process for producing an acrylonitrile-based polymer solution with which it is possible to homogeneously and efficiently dissolve an acrylonitrile-based polymer in a solvent, inhibit clogging of a filter or spinning nozzle, and stably produce an acrylonitrile-based polymer solution, and a shearing device which can be suitably used for performing the process are provided.

Further, according to the invention, a process for producing an acrylonitrile-based fiber using the acrylonitrile-based polymer solution obtained therefrom and a process for producing a carbon fiber having an acrylonitrile-based fiber as a precursor are also provided.

BRIEF DESCRIPTION OF DRAWINGS

Fig. 1 is a diagram schematically illustrating an exemplary device for producing an acrylonitrile-based polymer solution that can be suitably used for a process for producing an acrylonitrile-based polymer solution of the invention.

Fig. 2 is a diagram schematically illustrating an exemplary device (shearing device) for dispersing by shear force a mixture of an acrylonitrile-based polymer and a solvent.

Fig. 3 is a diagram schematically illustrating an exemplary device for heating a mixture of an acrylonitrile-based polymer and a solvent or an acrylonitrile-based polymer solution.

MODE(S) FOR CARRYING OUT THE INVENTION

According to the invention, a mixture of an acrylonitrile-based polymer and a solvent is supplied to a shearing device (in particular, a dispersion chamber of the device). The shearing device has a cylinder and a rotor that rotates inside the cylinder. The dispersion chamber is provided between an inner wall of the cylinder and an outer wall of the rotor. By rotating the rotor, shear force is applied to the mixture inside the dispersion chamber. By doing so, at least the polymer is dispersed and it is also possibly accompanied with dissolution of the polymer.

According to the first mode of the process for producing an acrylonitrile-based polymer solution of the invention, shear force is applied to a mixture in a dispersion chamber and the obtained mixture is then heated to yield an acrylonitrile-based polymer solution.

According to the second mode of the process for producing an acrylonitrile-based polymer solution of the invention, shear force is applied to a mixture in a dispersion chamber to yield an acrylonitrile-based polymer solution. In this case, heating is not performed after applying shear force.

According to the first mode described above, that is, when the mixture is heated after being applied with shear force, the rotor is rotated under the following conditions represented by the formula I at the time of applying shear force:

$$W = (W_1 - W_2)/M \geq 0.12 \ (kWh/kg) \cdots I.$$

In the above, $W_1$ is an electric power (kW) required for rotating the rotor at the time of applying shear force to the mixture. $W_2$ is an electric power (kW) required for obtaining the same rotation number as the rotation number of the rotor at the time of obtaining $W_1$ when, instead of the mixture, water is used in the same mass flow amount as the mixture. M is a mass flow amount (kg/h) of the acrylonitrile-based polymer supplied to the dispersion chamber at the time of obtaining $W_1$.

When shear force is applied to the mixture by rotating the rotor under the conditions at which the above W satisfies the formula I, it becomes easy for an acrylonitrile-based polymer and a solvent to get homogenously mixed. Accordingly, clogging of a filter hardly occurs, and therefore it is desirable.

The above W represents an electric power obtained from the electric power ($W_1 - W_2$), which is obtained by subtracting $W_2$ as an electric power at the time of using water (water in the same mass flow amount as the mixture for obtaining $W_1$) with the same rotation number as the rotation number of having $W_1$ from $W_1$ as an electric power for rotating the rotor in the mixture, expressed in terms of a unit mass flow amount of the acrylonitrile-based polymer in the mixture present in a dispersion chamber of a shearing device. Namely, it can be said that W is a value of shear force applied to the mixture while it stays within a shearing device, but expressed in electric power.

A system being applied with $W_2$ is basically the same as a system being applied with $W_1$ except that the same mass flow amount of water is used instead of the mixture (consequently, measured $W_1$ and $W_2$ are different from each other).

According to the second mode described above, that is, when an acrylonitrile-based polymer solution is obtained by applying shear force to a mixture in a dispersion chamber (heating is not performed after applying shear force), the rotor is rotated under the following conditions represented by the formula II at the time of applying shear force:

$$W = (W_1 - W_2)/M \geq 1.60 \ (\mathrm{kWh/kg}) \cdots \mathrm{II}.$$

In the above, $W_1$, $W_2$, and M are as defined in the above formula I.

According to the second mode described above, when shear force is applied to the mixture by rotating the rotor under the conditions at which the W satisfies the formula II, it becomes easy for an acrylonitrile-based polymer and a solvent to get homogenously mixed. Accordingly, clogging of a filter hardly occurs, and therefore it is desirable.

With regard to the first and second modes described above, to satisfy the conditions of the formula I or the formula II, it is actually sufficient that the rotation number of the rotor is controlled.

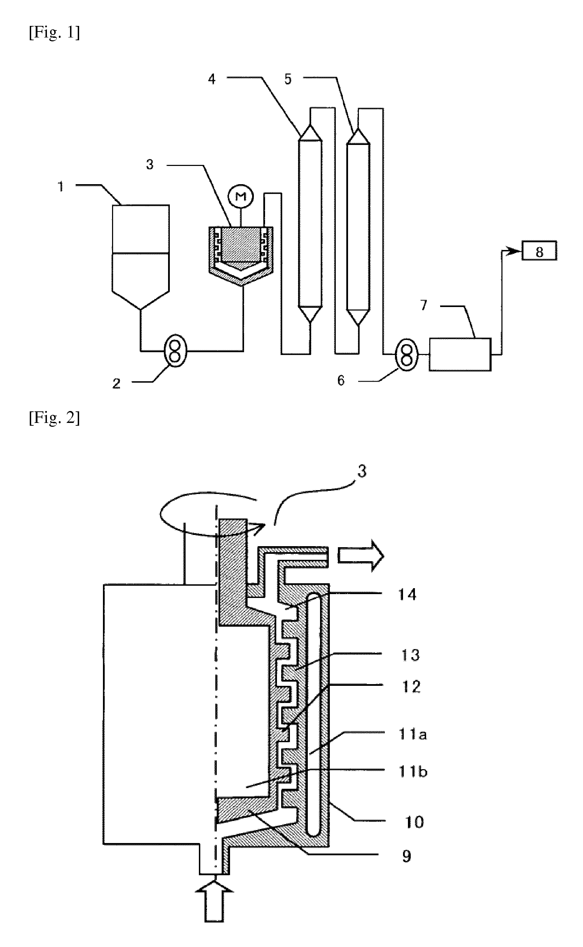

Hereinbelow, the embodiments for carrying out the invention are described in detail in view of the drawings. However, Figs. 1, 2 and 3 are all schematically described for easy explanation of the embodiments of the invention, and the invention is not limited at all to those configurations.

The device illustrated in Fig. 1 is described. To the supply tank 1, a mixture of an acrylonitrile-based polymer and a solvent is supplied. By a supply pump 2, the mixture is supplied to a shearing device 3, in which the acrylonitrile-based polymer is dispersed (in general, at least part of the polymer is dissolved in addition to dispersion of the polymer). The liquid (mixture) discharged from the shearing device is sent to a heating type dissolving device 4, in which the polymer is dissolved by heating. After that, the mixture is cooled in a cooling device 5 and pressurized by a spinning supply pump 6, and then filtered by a filtering filter 7. The acrylonitrile-based polymer solution obtained from the device can be supplied to, as a dope for spinning, a spinneret 8 of a spinning device for obtaining an acrylonitrile-based fiber. The device is not a batch type but a flow type shearing device.

This device is suitable for performing the first mode of the process for producing an acrylonitrile-based polymer solution described above. For performing the second mode described above, heating should be performed by the heating type dissolving device 4 of the device. Alternatively, by using a device having a configuration in which the heating type dissolving device 4 is removed from the device, the second mode can be performed.

According to the first mode for producing an acrylonitrile-based polymer solution, the upper limit of W at the time of applying shear force to a mixture of an acrylonitrile-based polymer solution and a solvent is preferably 4.00 kWh/kg or less. When it is 4.00 kWh/kg or less, it becomes easy to suppress an occurrence of gellation that is caused by increased temperature of the mixture by heating. The W is more preferably 2.70 kWh/kg or less. It is more preferably less than 1.60 kWh/kg.

When the W is 1.60 kWh/kg or more, an acrylonitrile-based polymer solution can be obtained even without heating after a step of applying shear force (shear force applying step). However, when it is 4.00 kWh/kg or less, heating may be performed after the shear force applying step. Whether to perform heating after the shear force applying step can be suitably selected based on a composition of the mixture, or the like.

Furthermore, with regard the second mode for producing an acrylonitrile-based polymer solution, that is, when heating by using a heating device is not performed, it is desirable to have the W of 1.60 kWh/kg or more and dissolve the polymer with heat generation caused by shear force while performing dispersion by shear force, because it becomes easy for the polymer to get homogenously mixed so that the filter is hardly clogged. The W is preferably 2.00 kWh/kg or more. Furthermore, from the viewpoint of preventing gellation caused by high temperature, the W is preferably 5.00 kWh/kg or less. It is more preferably 3.60 kWh/kg or less, and even more preferably 3.00 kWh/kg or less.

From the viewpoint of preventing high temperature of the mixture based on heat generation caused by shear force, it is also possible that the mixture is cooled by adding a jacket for cooling the mixture to at least part of the shearing device (in particular, perimeter of a device).

The temperature of the mixture at an exit of the dispersion chamber is preferably 40 to 115°C. When it is 40°C or higher, the polymer is slowly dissolved in a solvent so that it becomes easy to have homogeneous dissolving. Furthermore, when it is 115°C or lower, gelation of the dissolved mixture can be easily prevented. The exit temperature is more preferably 100°C or lower, and even more preferably 80°C or lower.

Herein, the shearing device illustrated in Fig. 2 is described. This device is a pin type mixer having a cylinder 10 with a barrel shape. In the inside of the same cylinder 10, a rotor 9 with a column shape is installed such that it can rotate at high speed while its axial center line is in line with the axial center line of the cylinder 10. Each of the rotor 9 and the cylinder 10 has pin members 12 and 13, and the pin members 12 and 13 are in a positional relationship in which they are not in contact with each other. A dispersion chamber 14 is formed between the inner wall of the cylinder 10 and the outer wall of the rotor 9. The outer shape of the rotor (excluding the pin member) has a rotating-body shape, and at least the inner wall of the cylinder (excluding the pin member) also has a rotating-body shape.

At the bottom center of the cylinder 10, an inlet for supplying a mixture of the polymer and a solvent sent by the pump to the inside of the cylinder 10 is formed and also an outlet for the obtained polymer solution is formed on the top part of the same cylinder 10.

In this device, the flow paths 11a and 11b for heating or cooling fluid are formed at each of the cylinder 10 and the rotor 9. By flowing heating or cooling fluid along those flow paths, it becomes easier to control the temperature of the mixture (liquid). However, it is not entirely necessary to use those flow paths.

With regard to the device, $W_1$ is an electric power measured at the time of rotating the rotor 9 with a certain rotation number when a mixture of an acrylonitrile-based polymer and a solvent is supplied to a dispersion chamber. $W_2$ is an electric power measured in the same manner as $W_1$ except that, instead of the mixture, water is used in the same mass flow amount as the mixture. M is a mass flow amount of the acrylonitrile-based polymer which is present in the mixture at the time of measuring $W_1$.

According to this shearing device, shear force is applied to the mixture by rotating the barrel-shaped rotor 9 having the pin member 12 while the mixture passes through the device and thus homogeneous mixing of an acrylonitrile-based polymer and a solvent is achieved. With regard to a change in the processing amount and viscosity, the target W can be obtained by modifying the rotation number of the rotor 9.

As long as it allows an operation satisfying the conditions that are represented by the formula I or the formula II, a known device can be used as a shearing device.

The shape of the shearing device is not limited as long as it can apply shear force to a fluid with high viscosity. Examples thereof include a kneader, an auger, a helical rotor, a screw extruder, a thermal processor, a pin mixer, a roll mixer, a tapered roll mixer, an internal mixer, a continuous mixer, a banburry mixer, a gear compounder, a meat mill, an attritor, and a sand grinder. Among them, from the viewpoint of having efficient application of shear force to the mixture, the pin mixer is preferable.

According to the first mode, the time for the mixture to stay in a dispersion chamber of the shearing device (dwell time) is preferably 3 to 800 seconds. When the dwell time is 3 seconds or longer, it becomes easy to disperse the polymer homogeneously in a solvent by applying shear force to the mixture. The dwell time is preferably 10 seconds or longer, and more preferably 15 seconds or longer. Furthermore, when it is 800 seconds or shorter, the shear force applied to the mixture is not excessive so that an occurrence of gelation caused by heat generation can be easily suppressed. The dwell time is preferably 300 seconds or shorter, and more preferably 200 seconds or shorter.

According to the second mode, the dwell time is preferably 600 to 1500 seconds. When the dwell time is 600 seconds or longer, it becomes easy to dissolve the polymer in a solvent by using shear heat by applying shear force to the mixture. Furthermore, when it is 1500 seconds or shorter, the shear force applied to the mixture is not excessive so that an occurrence of gelation caused by the heat generation can be easily suppressed. The dwell time is preferably 1000 seconds or shorter, and more preferably 800 seconds or shorter.

When the shearing device is a pin type mixer, a distance between the tip of the pin and the wall facing the tip of the pin is preferably 2 mm or more but less than 5 mm. As for Fig. 2, a distance between the tip of the pin member 12, which is projectingly installed on an outer wall of the rotor, and an inner wall of the cylinder 10 is preferably 2 mm or more but less than 5 mm. Furthermore, a distance between the tip of the pin member 13, which is projectingly installed on an inner wall of the cylinder, and an outer wall of the rotor 9 is 2 mm or more but less than 5 mm. When the distance is 2 mm or more, the pin member does not touch a wall surface even when there is mechanical vibration or eccentricity, and thus stable operation can be easily achieved. Furthermore, when the distance is less than 5 mm, it is easy to proceed with dissolving by generating shear force.

Furthermore, the axial direction distance between neighboring pin members (distance in rotational axis direction of a rotor, which is a distance in vertical direction in Fig. 2) is preferably 2 mm to 10 mm when the pin member 13 projectingly installed on an inner peripheral surface of the cylinder and the pin member 12 projectingly installed on an outer peripheral surface of the rotor come nearest to each other. When the distance is 2 mm or more, the pin members are not in contact with each other even when there is mechanical vibration or eccentricity, and thus stable operation can be easily achieved. Furthermore, when the distance is 10 mm or less, it is easy to proceed with dissolving by generating shear force.

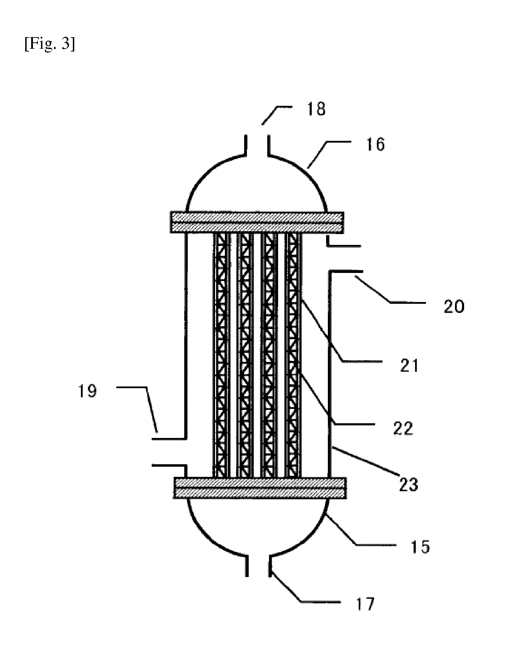

According to the first mode of the process for producing an acrylonitrile-based polymer solution, heating after the step of applying shear force can be performed by using a suitable heating device which enables heating to the temperature at which the acrylonitrile-based polymer is dissolved in a solvent. Examples of the heating device which may be used include a heat exchanger (a multi-tube type heat exchanger, a plate type heat exchanger, or the like) and a temperature control tank. For example, the heating can be performed by using a heating type dissolving device illustrated in Fig. 3. The device can be installed behind the shearing device.

With regard to the device illustrated in Fig. 3, a heating medium is supplied from the heating medium inlet 20 provided on the body 23 and the heating medium is discharged from the heating medium exit 19. A liquid for heating (a mixture of an acrylonitrile-based polymer and a solvent) flows starting from the liquid inlet 17, passes through the tube 21 via the inlet side channel cover 15, and is discharged from the liquid exit 18 via the exit side channel cover 16. The mixing element (static mixer) 22 is disposed inside the tube. Heat is applied from the heating medium to the liquid for heating the inside of the tube. Furthermore, as the liquid for heating is stirred by the mixer element, the polymer is dissolved.

With regard to the heating which is performed after the step of applying shear force, the mixture is preferably heated to 60°C to 150°C. When it is 60°C or higher, the acrylonitrile-based polymer is easily dissolved in a solvent. Furthermore, when it is 150°C or lower, gelation of an acrylonitrile-based polymer solution hardly occurs. The temperature is preferably 80°C to 140°C. More preferably, it is 90°C to 130°C. Particularly preferably, it is 100°C to 130°C.

Furthermore, the heating time for the heating which is performed after the step of applying shear force is preferably 1 minute to 15 minutes. When it is 1 minute or longer, it becomes easy for a mixture of an acrylonitrile-based polymer to dissolve sufficiently. Furthermore, when it is 15 minutes or shorter, gelation can be easily prevented. It is more preferably 3 to 10 minutes.

The acrylonitrile-based polymer is a polymer which contains acrylonitrile unit as a main constitutional unit. The ratio of the acrylonitrile unit in the acrylonitrile-based polymer is 80% by mass or more, for example. It is 92% by mass or more, and particularly 96% by mass or more. A monomer other than acrylonitrile constituting the acrylonitrile-based polymer can be suitably selected from a vinyl-based monomer which can copolymerize with acrylonitrile. Preferred examples thereof include a vinyl-based monomer which enhances hydrophilicity of the acrylonitrile-based polymer and a vinyl-based monomer which has an effect of promoting flame resistance.

Examples of the monomer which enhances hydrophilicity of the acrylonitrile-based polymer include a vinyl compound having a hydrophilic functional group such as a carboxy group, a sulfo group, an amino group, an amide group, or a hydroxyl group.

Examples of the monomer having a carboxy group include acrylic acid, methacrylic acid, itaconic acid, crotonic acid, citraconic acid, ethacrylic acid, maleic acid, and mesaconic acid. Among them, acrylic acid, methacrylic acid, and itaconic acid are preferable.

Examples of the monomer having a sulfo group include allyl sulfonic acid, methallyl sulfonic acid, styrene sulfonic acid, 2-acrylamide-2-methylpropane sulfonic acid, vinyl sulfonic acid, and sulfoporpyl methacrylate. Among them, allyl sulflonic acid, methallyl sulfonic acid, styrene sulfonic acid, and 2-acrylamide-2-methylpropane sulfonic acid are preferable.

Examples of the monomer having an amino group include dimethylaminoethyl methacrylate, diethylaminoethyl methacrylate, dimethylaminoethyl acrylate, diethylaminoethyl acrylate, tertiary butylaminoethyl methacrylate, allylamine, o-aminostyrene, and p-aminostyrene. Among them, dimethylaminoethyl methacrylate, diethylaminoethyl methacrylate, dimethylaminoethyl acrylate, and diethylaminoethyl acrylate are preferable.

Preferred examples of the monomer having an amide group include acrylamide, methacrylamide, dimethyl acrylamide, and crotone amide.

Examples of the monomer having a hydroxyl group include hydroxymethyl methacrylate, hydroxymethyl acrylate, 2-hydroxyethyl methacrylate, 2-hydroxyethyl acrylate, 3-hydroxypropyl methacrylate, 3-hydroxypropyl acrylate, 2-hydroxypropyl methacrylate, and 2-hydroxypropyl acrylate.

According to blending of such monomers, the acrylonitrile-based polymer can have improved hydrophilicity. With the improved hydrophilicity, a precursor fiber obtained from the polymer can have improved density so that an occurrence of a micro void on a surface layer part can be suppressed.

The aforementioned monomer may be used either singly or in suitable combination of two or more types. The blending amount of the monomer for improving the hydrophilicity of an acrylonitrile-based polymer is preferably 0.5 to 10.0% by mass, and more preferably 0.5 to 4.0% by mass in the acrylonitrile-based polymer.

Examples of the monomer having an effect of promoting flame resistance include acrylic acid, methacrylic acid, ethacrylic acid, itaconic acid, crotonic acid, citraconic acid, maleic acid, mesaconic acid, a lower alkyl ester, an alkali metal salt, an ammonium salt of those acids, acrylamide, and methacrylamide.

Among them, from the viewpoint of obtaining the effect of higher promoting flame resistance with a small blending amount, a monomer having a carboxy group is preferred. In particular, a vinyl-based monomer like acrylic acid, methacrylic acid, and itaconic acid is more preferred.

According to blending of such monomers, the time for the flame resistance treatment which is described below can be shortened, and thus production cost can be reduced.

The aforementioned monomer can be used either singly or in suitable combination of two or more types. The blending amount of the monomer having an effect of promoting flame resistance is preferably 0.5 to 10.0% by mass, and more preferably 0.5 to 4.0% by mass in the acrylonitrile-based polymer.

Any solvent can be used as long as it is capable of dissolving an acrylonitrile-based polymer. Examples thereof include an organic solvent such as dimethyl acetamide, dimethyl sulfoxide, and dimethyl formamide, and an aqueous solution of an inorganic compound such as zinc chloride and sodium thiocyanate. Dimethyl acetamide, dimethyl sulfoxide, and dimethyl formamide are preferable in that they allow obtainment of a dense precursor fiber of an acrylonitrile-based carbon fiber.

The mixture of acrylonitrile-based polymer obtained by using a shearing device contains a little amount of poor mixing products and the acrylonitrile-based polymer is homogeneously mixed therein. Thus, by dissolving the mixture, a homogeneous acrylonitrile-based polymer solution having a little amount of undissolved products and irregularities can be obtained.

The acrylonitrile-based polymer solution obtained by the invention contains a little amount of undissolved products and the acrylonitrile-based polymer can be homogeneously dissolved in a solvent. Accordingly, an acrylonitrile-based fiber (a precursor fiber of a carbon fiber) can be efficiently produced. Further, the acrylonitrile-based fiber obtained therefrom also has a little amount of irregularities in its length direction or in staple fibers, and thus it has a high quality. Examples of the spinning method include a known method like a wet spinning method and a dry and wet spinning method.

When thus-obtained acrylonitrile-based fiber is calcined according to a known method, a carbon fiber can be obtained.

According to the process of the invention, an acrylonitrile-based polymer is homogeneously and also sufficiently dissolved in a solvent so that clogging of a filter or a spinning nozzle hardly occurs. As a result, it is possible to produce an acrylonitrile-based polymer solution which is excellent in terms of cost.

EXAMPLES

Hereinbelow, the invention is described in detail with referring to Examples and Comparative Examples, but the invention is not limited to them. Meanwhile, various tests of Examples and Comparative Examples given below are as described in the followings.

<Filtering pressure increase test>

While being maintained at 60°C, the produced acrylonitrile-based polymer solution was supplied in a predetermined amount at a flow amount of 1.6 g/minute to a stainless steel filter for fiber calcination which has a filtering area of 28 $cm^2$ and a mesh of 5 $\mu$m (model number NF2M-05S, manufactured by Nippon Seisen Co., Ltd.). After having the acrylonitrile-based polymer solution pass through the filter, pressure difference as a difference in pressure before and after filtering at the time of having integrated pass-through polymer amount per unit area of 100 $kg/m^2$ and 1000 $kg/m^2$ was measured. With regard to the level of pressure increase, the pressure difference at the time of having integrated pass-through polymer amount of 100 $kg/m^2$ is subtracted from the pressure difference at the time of having integrated pass-through polymer amount of 1000 $kg/m^2$ and the resultant value is converted in terms of the mass of the integrated pass-through polymer which passes through a unit filtering area, and then used for comparison.

<Method for obtaining index W (method for measuring electric power)>

For the measurement of the electric power $W_1$ and $W_2$, a power meter (model number: MODEL6300, manufactured by KYORITSU ELECTRICAL INSTRUMENTS WORKS, LTD.) was used. The power meter was attached onto a connection end located on the primary side of an inverter for controlling a motor for rotating the rotor of a shearing device. $W_1$ is an average value obtained by measuring for 10 seconds the electric power (kW) required for rotating the rotor at the time of applying shear force to the mixture, and $W_2$ is an average value obtained by measuring for 10 seconds the electric power (kW) required for obtaining the same rotation number as the rotation number of the rotor at the time of obtaining $W_1$ when water is used in the same mass flow amount as the mixture instead of the mixture. The index W is a value obtained by dividing the value resulting from subtracting $W_2$ from $W_1$ by the mass flow amount M of the acrylonitrile-based polymer in the mixture which is present in a dispersion chamber of a shearing device (at the time of obtaining $W_1$).

(Example 1)

An acrylonitrile-based polymer consisting of 96% by mass of an acrylonitrile monomer unit (AN), 1% by mass of a methacrylic acid monomer unit (MAA), and 3% by mass of an acrylamide monomer unit (AAm), and dimethyl acetamide were prepared as an acrylonitrile-based polymer and a solvent, respectively.

The acrylonitrile-based polymer was added in small portions to a tank in which dimethyl acetamide is under stirring, and then it was mixed therein.

The mixture (polymer concentration of 21.2% by mass, and temperature of 10°C) was supplied at 450 g/minute to a shearing device illustrated in Fig. 2 by using a metering pump. The mixture discharged from the shearing device was supplied to a heating type dissolving device illustrated in Fig. 3. In that case, the index W for rotating the rotor by a shearing device was 0.28 kWh/kg and the dwell time of the mixture in the dispersion chamber was 2.4 minutes.

The temperature of the mixture discharged from the shearing device was set at 100°C or lower. To have such temperature, water was allowed to flow into the jacket of the shearing device so that the temperature of the mixture can be controlled. By doing so, the acrylonitrile-based polymer was dissolved in the solvent and an acrylonitrile-based polymer solution (dope for spinning) was obtained.

In the dispersion chamber 14 formed between the cylinder and the rotor of the shearing device, the distance between the inner wall of the cylinder and the outer wall of the rotor is 16.5 mm, and square column pin members having a projecting length of 13.5 mm from the wall, a height of 8 mm, and a width of 8 mm were arranged in 12 rows and 11 columns on an outer peripheral surface of the rotor and in 12 rows and 12 columns on an inner peripheral surface of the cylinder. The distance between the tip of the pin member added on the cylinder and the outer wall of the rotor was 3.0 mm and the distance between the tip of the pin member added on the rotor and the inner wall of the cylinder was 3.0 mm. The axial direction distance between neighboring pin members was 3 mm when the pin member projectingly installed on an inner peripheral surface of the cylinder and the pin member projectingly installed on an outer peripheral surface of the rotor come nearest to each other. As described herein, the "row" indicates the number of pin members in peripheral direction and the "column" indicates the number of pin members in axial direction of the rotor.

The heating type dissolving device is a multi-tube type heat exchanger which has an inner diameter of 12.7 mm, a length of 600 mm, and 12 tubes. The mixture of an acrylonitrile-based polymer and a solvent was applied with shear force by a shearing device while being cooled by water flowing through the flow path for heating or cooling fluid (11a and 11b), and then the mixture of an acrylonitrile-based polymer was heated to the temperature at an exit of the heat exchanger of 110°C by using a heating type dissolving device for dissolving, it was cooled to 60°C. The obtained acrylonitrile-based polymer mixture solution was subjected to a filtering pressure increase test and the results are as described in Table 1.

(Examples 2 and 3)

An acrylonitrile-based polymer solution was obtained according to the same operation as Example 1 except that the index W for rotating the rotor and the dwell time in the shearing device were changed to those described in Table 1.

(Examples 4 to 8)

An acrylonitrile-based polymer solution was obtained according to the same operation as Example 1 except that the index W for rotating the rotor and the dwell time in the shearing device were changed to those described in Table 1, and the heat exchanger was not used.

(Example 9)

An acrylonitrile-based polymer consisting of 98% by mass of an acrylonitrile monomer unit and 2% by mass of a methacrylic acid monomer unit, and dimethyl acetamide were prepared as an acrylonitrile-based polymer and a solvent, respectively.

The mixture (polymer concentration of 23.2% by mass, and temperature of 10°C) was supplied at 440 g/minute to a shearing device illustrated in Fig. 2 by using a metering pump. The mixture discharged from the shearing device was supplied to a heating type dissolving device illustrated in Fig. 3. In that case, the index W for rotating the rotor by a shearing device was 0.22 kWh/kg.

An acrylonitrile-based polymer solution was obtained in the same manner as Example 1 except those described above and then the obtained solution was subjected to a filtering pressure increase test.

(Examples 10 and 13)

An acrylonitrile-based polymer solution was obtained according to the same operation as Example 9 except that the index W for rotating the rotor and the dwell time in the shearing device were changed to those described in Table 1.

(Comparative Example 1)

An acrylonitrile-based polymer solution was obtained in the same manner as Example 1 except that the shearing device was not used and, by only using a heating type dissolving device (a multi-tube type heat exchanger), dissolving was carried out with 6 minutes of the dwell time in the exchanger and 110°C of the temperature of the mixture of an acrylonitrile-based polymer at an exit of the heat exchanger followed by cooling to temperature of 60°C.

(Comparative Examples 2 to 4)

An acrylonitrile-based polymer solution was obtained according to the same operation as Example 1 except that the index W for rotating the rotor and the dwell time in the shearing device were changed to those described in Table 1, and the heating type dissolving device was not used.

(Comparative Example 5)

An acrylonitrile-based polymer solution was obtained in the same manner as Example 9 except that the shearing device was not used and, by only using a heating type dissolving device (a multi-tube type heat exchanger), dissolving was carried out with 6 minutes of the dwell time in the heat exchanger and 110°C of the temperature of the mixture of an acrylonitrile-based polymer at an exit of the heat exchanger followed by cooling to temperature of 60°C.

(Comparative Examples 6 and 7)

An acrylonitrile-based polymer solution was obtained according to the same operation as Example 9 except that the index W for rotating the rotor and the dwell time in the shearing device were changed to those described in Table 1.

The results of the filtering pressure increase test for the above Examples and Comparative Examples are shown in Table 1. In the table, the dwell time in the shearing device indicates the time of mixture dwelling within a dispersion chamber of the shearing device. The temperature at an exit of the shearing device indicates the temperature of the mixture at an exit of the dispersion chamber of the shearing device.

[Table 1]

Table 1

| | Index W | Dwell time in shearing device | Temperature at exit of shearing device | Dwell time in heating type dissolving device | Filtering pressure increase test | Component ratio in polymer | Remarks |
|---|---|---|---|---|---|---|---|
| | kWh/kg | Minutes | °C | Minutes | Pa/(kg/m$^2$) | AN/MAA/AAm | |
| Example 1 | 0.28 | 2.4 | 70 | 6 | 72 | 96/1/3 | |
| Example 2 | 0.31 | 2.7 | 69 | 6 | 114 | 96/1/3 | |
| Example 3 | 1.76 | 12.2 | 75 | 6 | 188 | 96/1/3 | |
| Example 4 | 1.61 | 12.2 | 71 | Not used | 188 | 96/1/3 | |
| Example 5 | 1.68 | 12.2 | 75 | Not used | 149 | 96/1/3 | |
| Example 6 | 1.70 | 12.2 | 74 | Not used | 163 | 96/1/3 | |
| Example 7 | 2.27 | 12.2 | 74 | Not used | 121 | 96/1/3 | |
| Example 8 | 3.27 | 24.3 | 91 | Not used | 203 | 96/1/3 | |
| Example 9 | 0.22 | 2.8 | 56 | 6 | 148 | 98/2/0 | |
| Example 10 | 0.31 | 0.9 | 76 | 6 | 168 | 98/2/0 | |

(continued)

| | Index W | Dwell time in shearing device | Temperature at exit of shearing device | Dwell time in heating type dissolving device | Filtering pressure increase test | Component ratio in polymer | Remarks |
|---|---|---|---|---|---|---|---|
| | kWh/kg | Minutes | °C | Minutes | Pa/(kg/m$^2$) | AN/MAA/AAm | |
| Example 11 | 0.36 | 1.4 | 76 | 6 | 92 | 98/2/0 | |
| Example 12 | 0.47 | 2.8 | 69 | 6 | 111 | 98/2/0 | |
| Example 13 | 0.64 | 2.8 | 86 | 6 | 107 | 98/2/0 | |
| Comparative Example 1 | Not used | | | 6 | 229 | 96/1/3 | Shearing device was not used |
| Comparative Example 2 | 0.31 | 2.7 | 72 | Not used | 457 | 96/1/3 | Outside the index range |
| Comparative Example 3 | 1.28 | 12.2 | 88 | Not used | 295 | 96/1/3 | Outside the index range |
| Comparative Example 4 | 1.44 | 12.2 | 76 | Not used | 299 | 96/1/3 | Outside the index range |
| Comparative Example 5 | Not used | | | 6 | 439 | 98/2/0 | Shearing device was not used |
| Comparative Example 6 | 0.09 | 2.8 | 20 | 6 | 466 | 98/2/0 | Outside the index range |
| Comparative Example 7 | 0.11 | 1.6 | 28 | 6 | 516 | 98/2/0 | Outside the index range |

As it is obvious from the above examples and Comparative Examples, with the process of the invention, an acrylonitrile-based polymer can be dissolved homogeneously and sufficiently dissolved in a solvent by using a shearing device and a heating type dissolving device (the first mode). In particular, with the index W of 0.12 to 4.00 kWh/kg for rotating the rotor, a high effect of improving the filtering property, that is, effect of enhancing dissolving property, is obtained.

Further, when only a shearing device is used (the second mode), a good filtering property is included if the index W for rotating the rotor is in the range of 1.60 to 5.00 kWh/kg.

EXPLANATIONS OF LETTERS OR NUMERALS

1   Supply tank
2   Supply pump
3   Shearing device
4   Heating type dissolving device
5   Cooling device

6        Spinning supply pump
7        Filtering filter
8        Spinneret
9        Rotor
10       Cylinder
11a      Flow path for heating or cooling fluid
11b      Flow path for heating or cooling fluid
12       Pin member (on outer peripheral surface of rotor)
13       Pin member (on inner peripheral surface of cylinder)
14       Dispersion chamber
15       Channel cover on inlet side
16       Channel cover on exit side
17       Liquid inlet
18       Liquid outlet
19       Exit for heating medium
20       Inlet for heating medium
21       Tube
22       Mixer element
23       Body

**Claims**

1.  A process for producing an acrylonitrile-based polymer solution comprising supplying a mixture of an acrylonitrile-based polymer and a solvent to a dispersion chamber of a shearing device having a cylinder and a rotor that rotates inside the cylinder, rotating the rotor under the following conditions to apply shear force to the mixture, and thereafter heating the obtained mixture to obtain an acrylonitrile-based polymer solution:

    $$W = (W_1 - W_2)/M \geq 0.12 \ (\text{kWh/kg}),$$

    in which $W_1$ is an electric power (kW) required for rotating the rotor at the time of applying shear force to the mixture; $W_2$ is an electric power (kW) required for obtaining the same rotation number as the rotation number of the rotor at the time of obtaining $W_1$ when, instead of the mixture, water is used in the same mass flow amount as the mixture; and M is a mass flow amount (kg/h) of the acrylonitrile-based polymer supplied to the dispersion chamber at the time of obtaining $W_1$.

2.  The process for producing an acrylonitrile-based polymer solution according to claim 1, wherein the W is 4.00 kWh/kg or less.

3.  The process for producing an acrylonitrile-based polymer solution according to claim 1, wherein the W is less than 1.60 kWh/kg.

4.  The process for producing an acrylonitrile-based polymer solution according to any one of claims 1 to 3, wherein the mixture is heated at 100 to 130°C during the heating.

5.  The process for producing an acrylonitrile-based polymer solution according to any one of claims 1 to 4, wherein, for the heating, the heating is performed by using at least one means selected from a heat exchanger and a temperature control tank and a pin type mixer is used as a shearing device.

6.  A process for producing an acrylonitrile-based polymer solution comprising supplying a mixture of an acrylonitrile-based polymer and a solvent to a dispersion chamber of a shearing device having a cylinder and a rotor that rotates inside the cylinder and rotating the rotor under the following conditions to apply shear force to the mixture for obtaining an acrylonitrile-based polymer solution:

    $$W = (W_1 - W_2)/M \geq 1.60 \ (\text{kWh/kg}),$$

in which $W_1$ is an electric power (kW) required for rotating the rotor at the time of applying shear force to the mixture; $W_2$ is an electric power (kW) required for obtaining the same rotation number as the rotation number of the rotor at the time of obtaining $W_1$ when, instead of the mixture, water is used in the same mass flow amount as the mixture; and M is a mass flow amount (kg/h) of the acrylonitrile-based polymer supplied to the dispersion chamber at the time of obtaining $W_1$.

7. The process for producing an acrylonitrile-based polymer solution according to claim 6, wherein the W is 5.00 kWh/kg or less.

8. The process for producing an acrylonitrile-based polymer solution according to any one of claims 1 to 7, wherein the dwell time of the mixture in the dispersion chamber of the shearing device is 3 seconds to 1500 seconds.

9. The process for producing an acrylonitrile-based polymer solution according to any one of claims 1 to 8, wherein the temperature of the mixture at an exit of the dispersion chamber is 40°C to 115°C.

10. The process for producing an acrylonitrile-based polymer solution according to any one of claims 1 to 9, wherein the shearing device is a pin type mixer having pin members projectingly installed on positions of an inner wall of the cylinder and an outer wall of the rotor, each of the positions not being in contact with each other, and a distance between the tip of the pin member projectingly installed on the outer wall of the rotor and the inner wall of the cylinder is 2 mm or more but less than 5 mm.

11. The process for producing an acrylonitrile-based polymer solution according to any one of claims 1 to 10, wherein the shearing device is a pin type mixer having pin members projectingly installed on positions of an inner wall of the cylinder and an outer wall of the rotor, each of the positions not being in contact with each other, and a distance between the tip of the pin member projectingly installed on the inner wall of the cylinder and the outer wall of the rotor is 2 mm or more but less than 5 mm.

12. The process for producing an acrylonitrile-based polymer solution according to any one of claims 1 to 11, wherein the axial direction distance between neighboring pin members is 2 mm to 10 mm when the pin member projectingly installed on the inner wall of the cylinder and the pin member projectingly installed on the outer wall of the rotor come nearest to each other.

13. A shearing device for an acrylonitrile-based polymer solution, the shearing device having a cylinder and a rotor that rotates inside the cylinder in which pin members are projectingly installed on positions of an inner wall of the cylinder and an outer wall of the rotor, each of the positions not being in contact with each other, and a distance between the tip of the pin member projectingly installed on the outer wall of the rotor and the inner wall of the cylinder is 2 mm or more but less than 5 mm.

14. The shearing device for an acrylonitrile-based polymer solution according to claim 13, wherein the distance between the tip of the pin member projectingly installed on the inner wall of the cylinder and the outer wall of the rotor is 2 mm or more but less than 5 mm.

15. The shearing device for an acrylonitrile-based polymer solution according to claim 13 or 14, wherein the axial direction distance between neighboring pin members of the pin member projectingly installed on the inner wall of the cylinder and the pin member projectingly installed on the outer wall of the rotor is 2 mm to 10 mm.

16. A process for producing an acrylonitrile-based fiber by spinning an acrylonitrile-based polymer solution produced by the production process according to any one of claims 1 to 12 to obtain an acrylonitrile-based fiber.

17. A process for producing a carbon fiber by calcining an acrylonitrile-based fiber produced by the production process according to claim 16 to obtain a carbon fiber.

[Fig. 1]

[Fig. 2]

[Fig. 3]

**INTERNATIONAL SEARCH REPORT**

| International application No. |
| --- |
| PCT/JP2013/073660 |

**A. CLASSIFICATION OF SUBJECT MATTER**
*C08J3/09*(2006.01)i, *B01F1/00*(2006.01)i, *B01F3/12*(2006.01)i, *B01F7/16*
(2006.01)i, *B01F15/06*(2006.01)i, *D01D1/02*(2006.01)i, *D01F6/18*(2006.01)i,
*D01F9/22*(2006.01)i

According to International Patent Classification (IPC) or to both national classification and IPC

**B. FIELDS SEARCHED**

Minimum documentation searched (classification system followed by classification symbols)
C08J3/00-3/28, 99/00, B01F1/00-7/32, 15/00-15/06

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)
Thomson Innovation

**C. DOCUMENTS CONSIDERED TO BE RELEVANT**

| Category* | Citation of document, with indication, where appropriate, of the relevant passages | Relevant to claim No. |
| --- | --- | --- |
| P,A | JP 2013-119202 A (Mitsubishi Rayon Co., Ltd.), 17 June 2013 (17.06.2013), claims (Family: none) | 1-17 |
| A | JP 2002-45671 A (Mitsubishi Rayon Co., Ltd.), 12 February 2002 (12.02.2002), claims; paragraphs [0011], [0031]; fig. 1 (Family: none) | 1-17 |
| A | JP 8-318527 A (Mitsui Toatsu Chemicals, Inc.), 03 December 1996 (03.12.1996), claim 1; paragraph [0026]; fig. 1 (Family: none) | 1-17 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 October, 2013 (30.10.13) | 12 November, 2013 (12.11.13) |

| Name and mailing address of the ISA/ Japanese Patent Office | Authorized officer |
| --- | --- |
| Facsimile No. | Telephone No. |

Form PCT/ISA/210 (second sheet) (July 2009)

## INTERNATIONAL SEARCH REPORT

| International application No. |
| --- |
| PCT/JP2013/073660 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 3-94931 U  (Asada Tekko Kabushiki Kaisha), 27 September 1991 (27.09.1991), entire text (Family: none) | 1-17 |
| A | JP 2001-340741 A  (Kaneka Corp.), 11 December 2001 (11.12.2001), entire text (Family: none) | 1-17 |

Form PCT/ISA/210 (continuation of second sheet) (July 2009)

**EP 2 894 188 A1**

**Patent documents cited in the description**

- JP 2002045671 A